# EUROPEAN PATENT SPECIFICATION

(11) **EP 3 498 092 B1**
(45) Date of publication and mention of the grant of the patent: **23.02.2022**
(21) Application number: 18211393.6
(22) Date of filing: 10.12.2018
(51) Int. Cl.: A01K 89/01

(54) **FISHING SPINNING REEL**
ANGELSPINNROLLE
MOULINET DE PÊCHE

(30) Priority: 12.12.2017 JP 2017237314
(43) Date of publication of application: 19.06.2019
(60) Divisional application: 22151870.7
(73) Proprietor: Globeride, Inc., Tokyo 203-8511 (JP)
(72) Inventor: Shimizu, Yoshihito, Higashi Kurume-shi Tokyo 203-8511 (JP)
(74) Representative: Boult Wade Tennant LLP

(56) References cited:
- JP-A- 2002 153 173
- JP-A- 2009 005 638
- JP-A- 2010 104 275
- US-A- 5 615 843
- US-A- 5 788 173

## Description

### TECHNICAL FIELD

The present invention relates to a spinning reel for fishing.

### BACKGROUND

A fishing spinning reel includes a rotor rotating in accordance with a winding operation of a handle and a spool reciprocating in a front-rear direction. Due to its structure, a gap is formed between the rotor and the spool in the fishing spinning reel. Especially when the spool is moved to the front most during the winding operation, a large gap is generated between the spool and a front cylindrical portion of the rotor. When line slack occurs in this condition, the fishing line may move beyond a skirt portion of the spool and be tangled with the spool shaft, which is so-called line dropping. If the line dropping occurs, it is necessary to untangle the fishing line, which is a time-consuming task, grease on the spool shaft may adhere to the fishing line, breakage of the fishing line may occur, and other troubles may occur.

To address this, for example, Patent Literature 1 discloses a line anti-drop portion provided in front of the rotor cylindrical portion to prevent the fishing line from entering the inside even if the line slack occurs. The line anti-drop portion is formed by screwing a tapered annular body that gradually expands in diameter toward the tip end (rod tip when attached to the fishing rod) in the rotor cylindrical portion.

### RELEVANT REFERENCES

### LIST OF RELEVANT PATENT LITERATURE

Patent Literature 1: Japanese Patent Application Publication No. 2002-153173

Document JP 2009 005638 A discloses a fishing spinning reel comprising a reel body, a spool supported by the reel body, a rotor and a line anti-drop portion attached to a front portion of the rotor, wherein a concave portion is formed in an outer bottom portion of the line anti-drop portion along a circumferential direction, and a drain hole is formed in the concave portion to discharge water entered inside of the rotor to the outside of the rotor. Documents US 5 788 173 A, US 5 615 843 A and JP 2010 104275 A disclose each a fishing spinning reel according to the preamble of claim 1. Document JP 2002 153173 A a fishing spinning reel comprising a rotor and a line anti-drop portion attached to a front portion of the rotor.

### SUMMARY

The fishing spinning reel winds a fishing line that contains a lot of seawater, moisture, foreign matter and the like around the spool while the line is squeezed by a fishing line guide portion (line roller) provided at a tip portion of a rotor support arm. Once the reel body is attached to a fishing rod, it is used in various postures such that the spool faces diagonally upward or upward when the fishing line is released or wound up, when it is installed in a rod holder and the like. A plurality of through holes may be formed in the periphery of the front surface of the spool in order to reduce weight and improve operability. In this case, seawater or water may enter from the outside through the spool or the rotor into the line anti-drop portion disposed in the front portion of the rotor and stays therein during actual fishing.

If such sea water or water remains in the line anti-drop portion, it eventually solidifies and may enter between the spool shaft and the drive shaft (pinion), which may deteriorate smooth sliding motion and rotation. Moreover it may corrode components thereof, which causes the strength to be lowered. Especially, if sea water or moisture penetrates into the inside of the rotor, rotation support members such as a one-way clutch and a bearing will be damaged.

The invention has been made in view of the above, and one object of the invention is to provide a fishing spinning reel in which water entered inside can be effectively drained to the outside of the reel without stagnation of the water therein and thereby damage of parts can be prevented while preventing line dropping.

A fishing spinning reel according to one aspect of the invention includes a reel body, a spool supported by the reel body for retaining a fishing line wound therearound, a rotor having a fishing line guide portion for guiding the fishing line to the spool, and a line anti-drop portion attached to a front portion of the rotor and formed in an annular shape that prevents the fishing line from entering inside. The rotor is rotationally driven and the spool is reciprocated in a front-rear direction by a rotational operation of a handle provided on the reel body, and a drain hole is formed in the line anti-drop portion to discharge water entered inside of the rotor to the outside of the rotor. A concave portion is formed in an inner bottom portion of the line anti-drop portion along a circumferential direction. The drain hole is formed in the concave portion.

With the above-described fishing spinning reel, it is possible to prevent the line dropping which may cause the fishing line to be tangled with the spool shaft even when the line slack occurs since the annular line anti-drop portion is attached to the front portion of the rotor. Depending on the user condition of the reel, moisture (seawater, water) may move into the reel as the line anti-drop portion is formed in the annular shape. However, the drain hole for discharging the water to the outside of the rotor is provided therein so that stagnation of the water inside the rotor is prevented, which prevents any troubles caused by water immersion such as damaging components of the drive mechanism and the like.

Provided is a fishing spinning reel in which water entered inside can be effectively drained to the outside of the reel without stagnation of the water therein and thereby damaging of parts can be prevented while preventing the line dropping.

### BRIEF DESCRIPTION OF THE DRAWINGS

Fig. 1 is a sectional view of a fishing spinning reel according to an embodiment of the invention showing a cutaway view of a spool.
Fig. 2a is an enlarged view of a line anti-drop portion of the fishing spinning reel of Fig. 1, and Fig. 2b shows a state in which a reel body is inclined and water is discharged from the line anti-drop portion.
Fig. 3a is a plan view of the line anti-drop portion, Fig. 3b is a crosssectional view along the line A-A in Fig. 3a, and Fig. 3c is an enlarged view of a drain hole shown in Fig. 3b.
Fig. 4 is a plan view showing a state where the line anti-drop portion is fixed to a tip end portion of a rotor.
Fig. 5 is a view showing an example of use of the fishing spinning reel.

### DESCRIPTION OF THE EMBODIMENTS

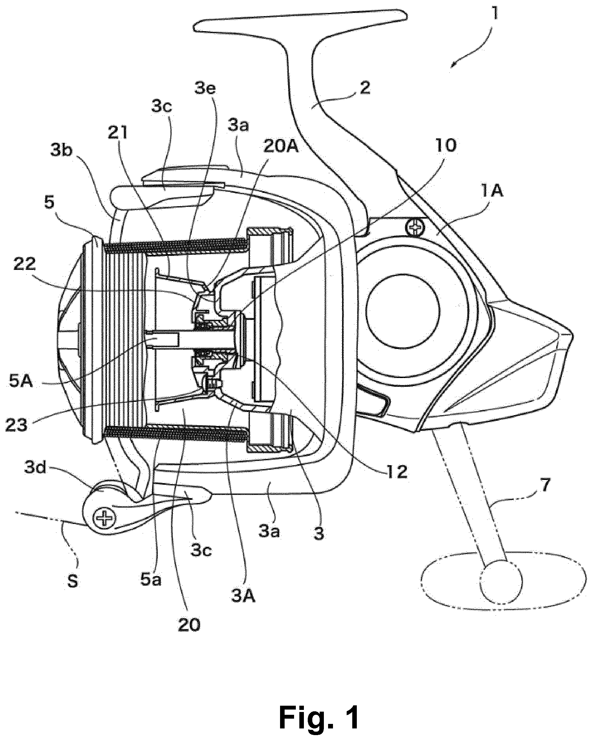

An embodiment of a fishing spinning reel according to an aspect of the invention will be hereinafter described with reference to Figs. 1 to 4.

A reel body 1A of the fishing spinning reel 1 (hereunder may also be referred to as a "reel") in the embodiment may be integrated with a rod attachment portion (reel leg) 2 that is designed to be mounted on a fishing rod. In front of the reel leg 2, provided are a rotor 3 rotatably supported and a spool 5 supported so as to be movable back and forth in synchronization with rotation of the rotor 3 and around which a fishing line S is wound and retained.

The rotor 3 may include a pair of arms 3a rotating around the spool 5, and on a front end portion of each arm 3a, provided is a bail supporting member 3c on which a proximal end of a bail 3b is mounted. The bail supporting member 3c is rotatably movable between a line winding position and a line releasing position. One of the proximal ends of the bail 3b is mounted on a line guide portion (line roller) 3d integrally formed with the bail supporting member 3c.

A handle shaft is rotatably supported in the reel body 1A, and a handle 7 is attached to the extruded end portion of the handle shaft. The handle shaft is coupled with a heretofore known wind drive mechanism which includes a pinion 10 meshing with a drive gear 7 fixed on the handle shaft so as to be rotationally driven. The rotor 3 is fixed to a tip end of the pinion 10 by a rotor nut 12, and the rotor 3 is rotationally driven by rotational operation of the handle 7. A spool reciprocating device driven via the pinion 10 is engaged with a rear end of a spool shaft 5A having the spool 5 attached to its tip end. The spool shaft 5A is inserted into the pinion 10 and is reciprocally driven in the front-rear direction by the rotational operation of the handle 7. With the above-described configuration, the rotor 3 is driven to rotate by the rotational operation of the handle 7, and the spool 5 is reciprocated in the front-rear direction. The fishing line S is evenly wound around a winding body 5a of the spool 5 via the line guide portion 3d of the rotationally driven rotor 3.

The rotor 3 has a cylindrical portion 3A that extends inside the winding body 5a of the spool 5, and components such as an anti-reverse mechanism (one-way clutch) and a bearing are disposed within the cylindrical portion. A recess 3f is formed in a central region of a front surface (surface situated closer to the rod tip) 3e of the cylindrical portion 3A, and the pinion 10 is inserted in a central region of the recess 3f. An external thread 10a is formed at the tip end of the pinion 10, and the rotor nut 12 is threadably engaged with this portion and brought into contact with the bottom of the recess 3f so that the rotor 3 is fixed such that it rotates in conjunction with the pinion 10.

A bearing 15 is disposed between the rotor nut 12 and the spool shaft 5A inserted through the pinion 10 so as to smoothly rotate and drive the rotor 3.
Inside the cylindrical portion 3A of the rotor 3, components (not shown) such as the one-way clutch disposed on the pinion 10 to prevent reverse rotation and a bearing for rotatably supporting the pinion and the like are provided.

On the front end face of the cylindrical portion 3A of the rotor 3, attached is a line anti-drop portion 20 that prevents a fishing line from entering the inside from a gap between the rotor 3 and the spool 5. The line anti-drop portion 20 is provided with a peripheral wall 21 opposed to an inner peripheral surface of the winding body so that the fishing line is unable to enter the inside along the inner surface of the winding body 5a of the spool even when the spool 5 moves to the foremost position from the state shown in Fig. 1 and a large gap is generated between the spool 5 and the cylindrical portion 3A of the rotor 3. The line anti-drop portion 20 of the embodiment will be now described.

The line anti-drop portion 20 of the embodiment is formed separately from the rotor 3 and configured to be mounted on the front end surface of the cylindrical portion 3A of the rotor 3. Further, the line anti-drop portion 20 is formed in an annular (cup-like) shape having the peripheral wall 21 that opens at the front side and an inner bottom portion 22. At the center of the inner bottom portion (bottom portion) 22, an opening 22a is formed to allow the spool shaft 5A to be inserted therethrough.

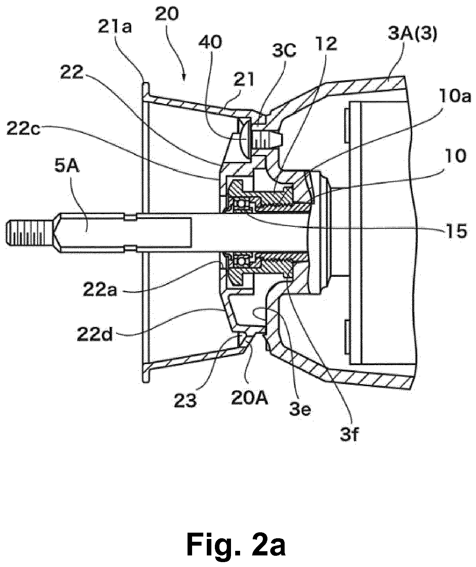

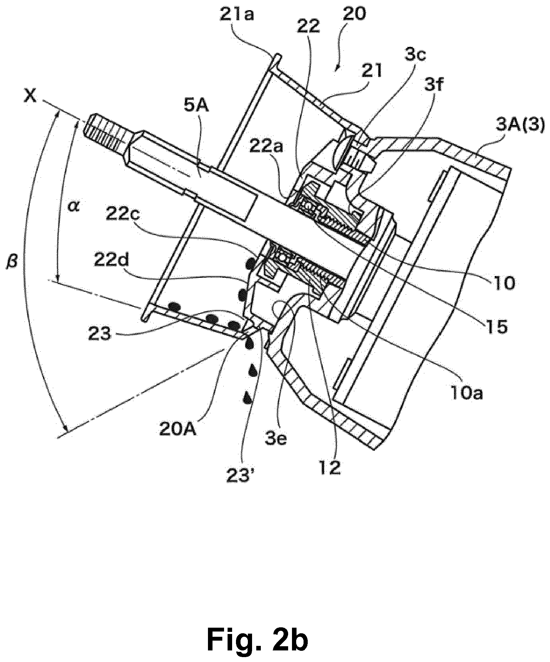

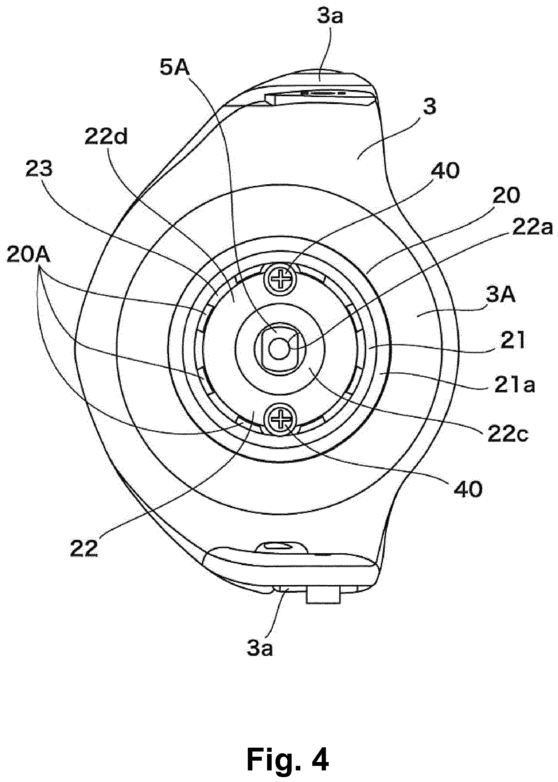

A circular opening 22b for fixing is formed in the inner bottom portion 22 so as to coincide with a boss 3C protrudingly formed on the front end surface of the cylindrical portion 3A of the rotor 3. In the embodiment, two bosses 3C are formed at approximately 180 ° interval (on each side in the diametrical direction), and the circular opening 22b is formed in the inner bottom portion 22 of the line anti-drop portion 20 respectively at a position corresponding to the boss 3C. By fitting the bosses 3C of the cylindrical portion 3A of the rotor 3 into the circular openings 22b, it is possible to attach the line anti-drop portion 20 to the rotor 3. An internal thread is formed on the boss 3C. The line anti-drop portion 20 is integrated (fixed) with the rotor 3 (see Figs. 2 and 4) by disposing the line anti-drop portion 20 onto the rotor 20 and inserting a screw 40 into the internal thread.

A drain hole 20A is formed in the line anti-drop portion 20 so that water moving along the peripheral wall 21 to the inside can be discharged to the outside of the rotor 3. The drain hole 20A in the line anti-drop portion is formed in the inner bottom portion 22 to prevent the water from remaining inside. More specifically, by forming the drain hole in a boundary region between the peripheral wall 21 and a radially outer area of the inner bottom portion 22, it is possible to effectively drain the water flowing along the peripheral wall 21. In the embodiment, eight drain holes 20A having the same size are formed at equal intervals along the circumferential direction in the boundary region.

The inner bottom portion 22 has a flat surface and the drain hole 20A is preferably formed such that an annular concave portion (concave groove) 23 is firstly formed in the flat surface of the inner bottom portion 22 and then the drain hole 20A is formed in the concave portion 23. By providing the concave portion 23 in the inner bottom portion 22 in this way, it is easy to converge the water entered inside on the concave portion. Moreover by forming the drain hole 20A in that area, it is possible to effectively drain the converged water.

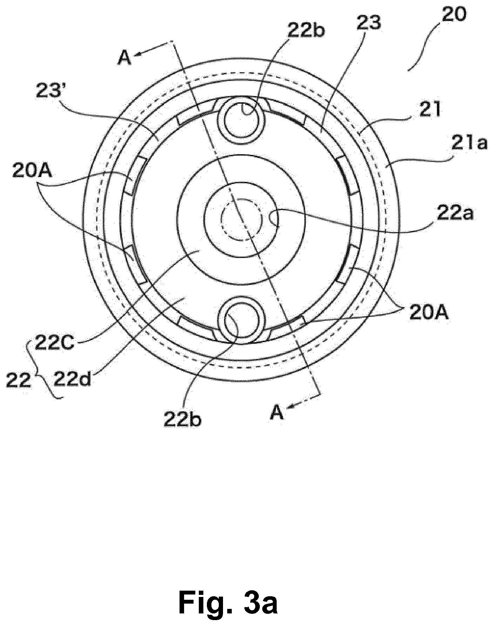

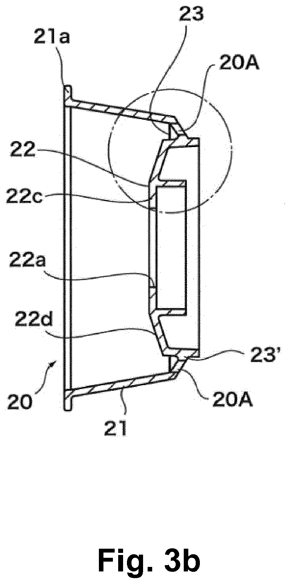

Although the inner bottom portion 22 may have a flat surface, it is preferable that the inner bottom portion 22 have an inclined surface such that the height gradually decreases toward the radially outer side (the radially outer side portion becomes gradually deeper). That is, as shown in Figs. 3a to 3c, when forming the annular concave portion 23 in the outer peripheral region of the inner bottom portion 22, for example, the periphery of the opening 22a through which the spool shaft is inserted and provided in the inner bottom portion 22 is made as a flat surface 22c. An inclined surface 22d gradually descending from the peripheral edge of the flat surface 22c toward the peripheral wall 21 is formed and the annular concave portion 23 in which the drain hole 20A is provided is formed between the inclined surface 22d and the peripheral wall 21. With this configuration, it is possible to efficiently drain water without stagnation of the water even in a situation where water easily enters into the line anti-drop portion 20, such as during actual fishing.

The peripheral wall 21 of the line anti-drop portion 20 may be formed in a cylindrical shape. However it is preferable that the peripheral wall 21 be formed in a tapered shape so that its diameter increases toward the tip end of the spool as shown in Fig. 1. By making the peripheral wall 21 gradually enlarge in diameter in this manner, it becomes possible to effectively stop the fishing line that has dropped off. In particular, by forming a flange 21a projecting outward in the radial direction at the tip opening portion of the peripheral wall 21, it is possible to decrease the distance to the inner surface of the winding body of the spool so that the line dropping can be more effectively prevented.

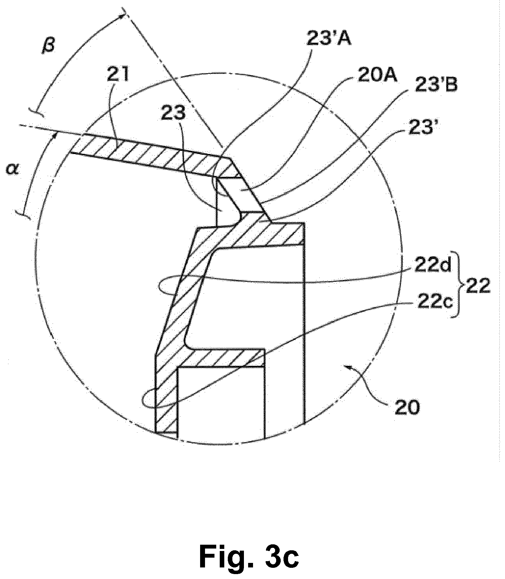

It is preferable that the concave portion 23 is formed in an inclined manner such that its inner surface 23'A and outer surface 23'B of a bottom portion 23' expands in diameter toward the tip end of the spool (see Fig. 3c).
As the bottom portion 23' is inclined in this manner, it is possible to efficiently discharge water moving along the peripheral wall 21 and the inclined surface 22d when the reel (line anti-drop portion 20) tilts diagonally upward or upward as shown in Fig. 2b. In particular, when an inclination angle of the peripheral wall 21 with respect to the spool shaft center X is denoted by "α" and an inclination angle of the concave portion 23 (bottom portion 23') formed in the inclined manner with respect to the spool shaft center X is denoted by "β", the line anit-drop portion 20 is formed to satisfy α < β. In this way, it is possible to more efficiently guide water moving along the peripheral wall 21 and water moving along the inclined surface 22d to the concave portion 23, discharge the water therefrom, and prevent the water from remaining in the concave portion. In the same manner as the outer peripheral surface, the inner peripheral surface of the peripheral wall 21 is formed into a tapered shape (reverse tapered) in which the diameter increases toward the tip end of the spool. Also, the outer surface 23'B of the bottom portion 23' with the inclination angle β makes it difficult for water to enter from the outside and move along the peripheral wall 21 and the cylindrical portion 3A of the rotor 3 to penetrate into the inside through the drain hole 20A, which means that the water hardly enters and easily goes out.

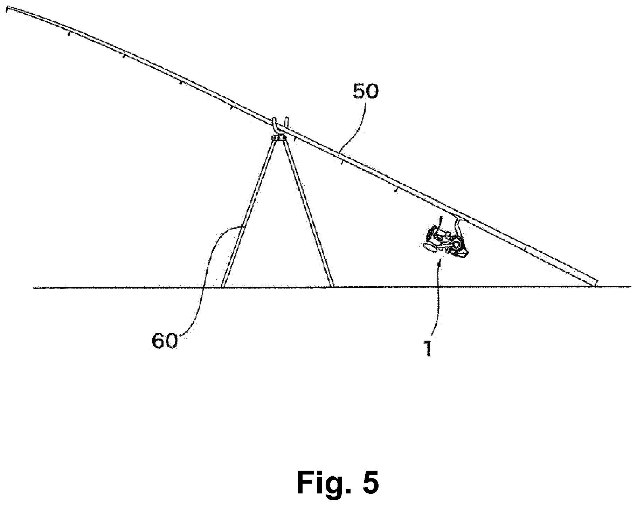

During actual fishing, the fishing spinning reel 1 as described above, for example, is put on a rod holder 60 while the reel is attached to the fishing rod 50 as shown in Fig. 5, or when the fishing rod is held by a user, the user whips or moves the fishing rod in other ways, so that the line anti-drop portion 20 built in the reel main body may be directed such that the opening faces upward as shown in Fig. 2b. When the handle is operated to wind the fishing line around the spool in such a state, water adhered to the fishing line sometimes penetrates into the line anti-drop portion 20. However since the drain hole 20A is provided at the above-described position, it is possible to effectively drain the water to the outside of the rotor and to prevent the water from staying in the line anti-drop portion. Therefore it is possible to prevent troubles such as water stays and is eventually solidified, the staying water enters between the spool shaft 5A and the drive shaft (pinion 10) and deteriorates smooth sliding motion and rotation, the water corrodes components thereof to lower the strength of the components and so on.

While the foregoing has described the embodiments of the invention, the invention is not limited thereto and is susceptible to various modifications. In the above-described embodiment, the line anti-drop portion is formed separately from the rotor, but may be integrally formed with the rotor and its shape is not particularly limited. Further, it is possible to appropriately modify the shape, size, the number of the drain hole(s) 20A and the like formed in the line anti-drop portion 20. Moreover, when the drain hole is formed in the concave portion, the concave portion may be formed in a continuous annular shape or may be formed corresponding to the drain hole. Further, as long as water discharged from the line anti-drop portion does not enter inside again, the configuration of the rotor and the spool can be modified as needed.

### LIST OF REFERENCE NUMBERS

- 1: fishing spinning reel
- 1A: reel body
- 3: rotor
- 5: spool
- 20: line anti-drop portion
- 21: peripheral wall
- 22: inner bottom portion
- 20A: drain hole
- 23: concave portion
- S: fishing line

## Claims

1. A fishing spinning reel (1), comprising:
a reel body (1A);
a spool (5) supported by the reel body (1A) for retaining a fishing line (S) wound therearound;
a rotor (3) having a fishing line guide portion for guiding the fishing line (S) to the spool (5); and
a line anti-drop portion (20) attached to a front portion of the rotor (3), the line anti-drop portion (20) being formed in an annular shape that prevents the fishing line (S) from entering inside,
wherein the rotor (3) is rotationally driven and the spool (5) is reciprocated in a front-rear direction by a rotational operation of a handle (7) provided on the reel body (1A), and
a drain hole (20A) is formed in the line anti-drop portion (20) to discharge water entered inside of the rotor to the outside of the rotor (3),
**characterised by**:
a concave portion (23) is formed in an inner bottom portion (22) of the line anti-drop portion (20) along a circumferential direction, and the drain hole (20A) is formed in the concave portion (23).

2. The fishing spinning reel of claim 1, wherein the inner bottom portion (22) of the line anti-drop portion (20) is formed to have an inclined surface such that the height decreases toward radially outer side, and the concave portion (23) is formed in an area where the height is low.

3. The fishing spinning reel (1) of claim 1 or 2, wherein the line anti-drop portion (20) has a peripheral wall (21) whose diameter increases toward a tip end of the spool (5), and the concave portion (23) is formed in an inclined manner such that its bottom expands in diameter toward the tip end of the spool (5).

4. The fishing spinning reel (1) of claim 3, wherein when an inclination angle of the peripheral wall (21) with respect to a spool shaft center (X) is denoted by "α" and an inclination angle of the concave portion (23) formed in the inclined manner with respect to the spool shaft center (X) is denoted by "β", the line anti-drop portion (20) is formed to satisfy α < β.

## Patentansprüche

1. Angel-Spinnrolle (1), umfassend:
einen Rollenkörper (1A);
eine Spule (5), die von dem Rollenkörper (1A) gestützt ist, um eine darum gewickelte Angelschnur (S) zu halten;
einen Rotor (3) mit einem Angelschnurführungsabschnitt zum Führen der Angelschnur (S) zu der Spule (5); und
einen Schnur-Antifallabschnitt (20), der an einem vorderen Abschnitt des Rotors (3) befestigt ist, wobei der Schnur-Antifallabschnitt (20) in einer ringförmigen Form ausgebildet ist, die verhindert, dass die Angelschnur (S) in das Innere gelangt,
wobei der Rotor (3) drehend angetrieben ist und die Spule (5) durch eine Drehbetätigung eines an dem Rollenkörper (1A) bereitgestellten Griffs (7) in einer Vorne-Hinten-Richtung hin- und herbewegt wird, und
ein Ablaufloch (20A) in dem Schnur-Antifallabschnitt (20) ausgebildet ist, um in das Innere des Rotors eingetretenes Wasser aus dem Rotor (3) abzuführen,
**dadurch gekennzeichnet, dass**:
ein konkaver Abschnitt (23) in einem inneren Bodenabschnitt (22) des Schnur-Antifallabschnitts (20) entlang einer Umfangsrichtung gebildet ist und das Ablaufloch (20A) in dem konkaven Abschnitt (23) ausgebildet ist.

2. Angel-Spinnrolle nach Anspruch 1, wobei der innere Bodenabschnitt (22) des Schnur-Antifallabschnitts (20) mit einer geneigten Oberfläche derart ausgebildet ist, dass die Höhe zur radial äußeren Seite hin abnimmt, und der konkave Abschnitt (23) in einem Bereich gebildet ist, in dem die Höhe gering ist.

3. Angel-Spinnrolle (1) nach Anspruch 1 oder 2, wobei der Schnur-Antifallabschnitt (20) eine Umfangswand (21) aufweist, deren Durchmesser zu einem Spitzende der Spule (5) hin zunimmt, und der konkave Abschnitt (23) geneigt ausgebildet ist, so dass sich sein Boden zum Spitzende der Spule (5) hin im Durchmesser erweitert.

4. Angel-Spinnrolle (1) nach Anspruch 3, wobei, wenn ein Neigungswinkel der Umfangswand (21) in Bezug auf eine Spulenwellenmitte (X) mit "α" bezeichnet ist, und ein Neigungswinkel des konkaven Abschnitts (23) der in Bezug auf die Spulenwellenmitte (X) geneigt ausgebildet ist, mit "β" bezeichnet ist, der Schnur-Antifallabschnitt (20) so ausgebildet ist, dass er α < β erfüllt.

## Revendications

1. Moulinet de pêche au lancer (1), comprenant :
un corps de moulinet (1A) ;
une bobine (5) supportée par le corps de moulinet (1A) pour retenir une ligne de pêche (S) enroulée autour de celle-ci ;
un rotor (3) ayant une partie de guidage de ligne de pêche pour guider la ligne de pêche (S) vers la bobine (5) ; et
une partie anti-chute de ligne (20) fixée à une partie avant du rotor (3), la partie anti-chute de ligne (20) étant formée en une forme annulaire qui empêche la ligne de pêche (S) d'entrer à l'intérieur,
dans lequel le rotor (3) est entraîné en rotation et la bobine (5) est animée d'un mouvement de va-et-vient dans une direction avant-arrière par une opération de rotation d'une poignée (7) prévue sur le corps de moulinet (1A), et
un trou d'évacuation (20A) est formé dans la partie anti-chute de ligne (20) pour évacuer l'eau qui est entrée à l'intérieur du rotor vers l'extérieur du rotor (3),
**caractérisé en ce que** :
une partie concave (23) est formée dans une partie inférieure interne (22) de la partie anti-chute de ligne (20) le long d'une direction circonférentielle, et le trou d'évacuation (20A) est formé dans la partie concave (23).

2. Moulinet de pêche au lancer de la revendication 1, dans lequel la partie inférieure interne (22) de la partie anti-chute de ligne (20) est formée pour avoir une surface inclinée de sorte que la hauteur diminue vers le côté radialement externe, et la partie concave (23) est formée dans une zone où la hauteur est faible.

3. Moulinet de pêche au lancer (1) de la revendication 1 ou 2, dans lequel la partie anti-chute de ligne (20) a une paroi périphérique (21) dont le diamètre augmente vers une extrémité de pointe de la bobine (5), et la partie concave (23) est formée d'une manière inclinée de sorte que son fond s'étende en diamètre vers l'extrémité de pointe de la bobine (5).

4. Moulinet de pêche au lancer (1) de la revendication 3, dans lequel lorsqu'un angle d'inclinaison de la paroi périphérique (21) par rapport à un centre d'arbre de bobine (X) est désigné par « α » et un angle d'inclinaison de la partie concave (23) formée de manière inclinée par rapport au centre d'arbre de bobine (X) est désigné par « β », la partie anti-chute de ligne (20) est formée pour satisfaire α < β.
